# EUROPEAN PATENT APPLICATION

(11) **EP 4 807 812 A1**
(43) Date of publication of application: **16.09.2026**
(21) Application number: 24899244.8
(22) Date of filing: 10.07.2024
(51) Int. Cl.: H01M 4/587, H01M 4/133, H01M 4/1393, H01M 10/0525, H01M 10/058

(54) **CARBON-BASED NEGATIVE ELECTRODE ACTIVE MATERIAL, PREPARATION METHOD, SECONDARY BATTERY AND ELECTRIC DEVICE**

(30) Priority: 07.12.2023 CN 202311675585
(71) Applicant: Contemporary Amperex Technology Co., Limited, Ningde, Fujian 352100 (CN)
(72) Inventor: PENG, Bin, Ningde, Fujian 352100 (CN); MA, Jianjun, Ningde, Fujian 352100 (CN); HE, Libing, Ningde, Fujian 352100 (CN); LIU, Wei, Ningde, Fujian 352100 (CN)
(74) Representative: Kraus & Lederer PartGmbB
(86) International application number: PCT/CN2024/104768
(87) International publication number: WO 2025/118593

(57) **Abstract**

A carbon-based negative electrode active material, a preparation method, a secondary battery and an electric device . The gram volume of the carbon-based negative electrode active material is 345- 355 mAh/g, and the powder compaction density under a pressure of 20000 N is greater than 1.55 g/cm³ and less than 1.65 g/cm³. The secondary battery prepared from the carbon-based negative electrode active material has both good cycle performance and high energy density.

## Description

### CROSS-REFERENCE TO RELATED APPLICATIONS

This application claims priority to Chinese Patent Application No. 202311675585.2, filed on December 07, 2023 and entitled "CARBON-BASED NEGATIVE ELECTRODE ACTIVE MATERIAL, PREPARATION METHOD, SECONDARY BATTERY, AND POWER CONSUMING APPARATUS", which is incorporated herein by reference in its entirety.

### TECHNICAL FIELD

The present disclosure relates to the technical field of secondary batteries, and in particular, to a carbon-based negative electrode active material, a preparation method, a secondary battery, and a power consuming apparatus.

### BACKGROUND

In recent years, with the increasingly wide use of secondary batteries in energy storage power systems such as hydroelectric, thermal, wind, and solar power stations, and in many other fields such as electric tools, electric bicycles, electric motorcycles, electric vehicles, military equipment, and aerospace, an increasingly higher requirement is raised for the service life, the energy storage performance, and the like of the secondary batteries in the market.

A negative electrode active material is one of important raw materials of the secondary battery, and has a significant impact on the electrical performance of secondary battery. In order to meet the ever-increasing market demand, it is necessary to provide a negative electrode active material to improve the cycling performance of the secondary battery.

### SUMMARY

The present disclosure provides a carbon-based negative electrode active material. A gram volume of the carbon-based negative electrode active material is 345 mAh/g to 355 mAh/g, and a powder compaction density at a pressure of 20000 N is greater than 1.55 g/cm³ and less than 1.65 g/cm³. A secondary battery prepared from the carbon-based negative electrode active material has a high energy density while having good cycling performance.

In any implementation, the powder compaction density of the carbon-based negative electrode active material at the pressure of 20000 N is 1.57 g/cm³ to 1.62g/cm³.

In any implementation, the powder compaction density of the carbon-based negative electrode active material at the pressure of 49000 N is greater than 1.73 g/cm³ and less than 1.84 g/cm³. The carbon-based negative electrode active material within this range is conductive to better improving the cycling performance of the secondary battery.

In any implementation, the gram volume of the carbon-based negative electrode active material is 346 mAh/g to 353 mAh/g. The gram volume of the carbon-based negative electrode active material within this range is conductive to improving the stability of the negative electrode active material in a cycling process, thus improving the cycling performance of the secondary battery.

In any implementation, the carbon-based negative electrode active material includes primary particles and secondary particles. Optionally, a quantity proportion of the primary particles in the carbon-based negative electrode active material is greater than or equal to a quantity proportion of the secondary particles in the carbon-based negative electrode active material. It is conductive to reducing fragmentation of an active material structure due to expansion and contraction of the carbon-based negative electrode active material in the cycling process and improving the structural stability of the carbon-based negative electrode active material, thus improving the cycling performance of the secondary battery.

In any implementation, the carbon-based negative electrode active material satisfies at least one of the following conditions:
a) a particle size distribution K is 1.0 to 1.6, optionally 1.1 to 1.50, K=(Dv90-Dv10)/Dv50;
b) a volume distribution particle size Dv50 is 8 µm to 13 µm, optionally, 9 µm to 12 µm; and
c) a graphitization degree is 88% to 95%, optionally 90% to 95%.

Controlling the particle size and the particle size distribution within this range is conductive to reducing side reactions of the carbon-based negative electrode active material and irreversible consumption of active ions (such as lithium ions) in the cycling process, thereby improving the cycling performance of the secondary battery. The graphitization degree of the carbon-based negative electrode active material within this range helps to increase an energy density of the negative electrode active material and improve the cycling performance of the secondary battery.

In any implementation, a specific surface area of the carbon-based negative electrode active material is 1.25 m²/g to 1.95 m²/g, optionally, 1.25 m²/g to 1.85 m²/g. A tap density is 1.07 g/cm³ to 1.27 g/cm³. The specific surface area and/or the tap density of the carbon-based negative electrode active material within the ranges is conductive to reducing the side reactions of the carbon-based negative electrode active material in the cycling process and improving the cycling performance of the secondary battery.

In any implementation, the carbon-based negative electrode active material is synthetic graphite. The negative electrode active material is widely available and low-cost, which helps to control the production costs of the secondary battery.

A second aspect of the present disclosure provides a preparation method of a carbon-based negative electrode active material, including the following steps:
providing a raw material;
treating the raw material to obtain an intermediate;
graphitizing the intermediate to obtain a graphitized product; and
screening the graphitized product to obtain the carbon-based negative electrode active material.

A gram volume of the carbon-based negative electrode active material is 345 mAh/g to 355 mAh/g, and a powder compaction density at a pressure of 20000 N is greater than 1.55 g/cm³ and less than 1.65 g/cm³.

The carbon-based negative electrode active material prepared by this method has a suitable energy density and good cycling stability, and a secondary battery prepared from this material has good cycling performance.

In any implementation, maximum power of the graphitizing is 70% to 90% of rated power of graphitizing equipment.

In any implementation, a temperature of the graphitizing is 2600°C to 3000°C.

In any implementation, time of the graphitizing is 10 h to 50 h.

In any implementation, the raw material includes one or more of a petroleum coke, a needle coke, and a pitch coke, optionally, the needle coke.

In any implementation, based on a total volume of the raw material, a volume percentage of a fibrous structure in the raw material is greater than or equal to 55%, optionally, 58% to 70%.

A raw material with more fibrous structures is conductive to improving the compaction density and gram volume of the graphitized negative electrode active material, so that the graphitized negative electrode active material retains high integrity in the compaction process, and a battery has a good energy density while maintaining a high cycle life. However, an excessively high proportion of the fibrous structure can increase the costs and expansion rate of the graphitized negative electrode active material and reduce the dynamic performance. The raw material with the volume percentage of the fibrous structure within the above range not only has lower costs, but also enables the graphite to have a good gram volume and a battery cell to have a dynamic window throughout its entire life cycle, thereby comprehensively improving the long-term cycle life and electrochemical performance of the battery.

In any implementation, the treating the raw material specifically includes the following steps: crushing, shaping, and grading the raw material to obtain a first precursor; pelleting the first precursor to obtain a second precursor; and performing low-temperature carbonization on the first precursor and the second precursor to obtain the intermediate.

In any implementation, the first precursor satisfies at least one of the following conditions:
(1) a particle size Dv50 of the first precursor is 6.5 µm to 10.5 µm;
(2) a particle size distribution (Dv90-Dv10)/Dv50 of the first precursor is 1.05 to 1.75; and
(3) a tap density of the first precursor is 0.55 g/cm³ to 0.75 g/cm³.

In any implementation, a volume distribution particle size Dv50 of the second precursor is 11 µm to 15 µm.

Controlling the particle size and particle size distribution of the raw material or an intermediate material of the negative electrode active material can obtain a negative electrode active material with a good specific surface area and particle size distribution, which helps to obtain a negative electrode active material with a suitable powder compaction density. The wettability of the negative electrode active material can be improved, and the cycling performance of the secondary battery prepared from the carbon-based negative electrode active material can be improved.

In any implementation, mixing a graphitized product of the first precursor with a graphitized product of the second precursor in a mass ratio of (1:1) to (6:4) can improve the structural stability of the negative electrode active material in the cycling process and help to improve the cycling performance of the secondary battery.

A third aspect of the present disclosure provides a secondary battery including a negative electrode plate. The negative electrode plate includes a negative electrode current collector and a negative electrode film layer arranged on at least one surface of the negative electrode current collector. The negative electrode film layer includes the carbon-based negative electrode active material in the first aspect of the present disclosure or the carbon-based negative electrode active material prepared by the method in the second aspect of the present disclosure.

In any implementation, the negative electrode plate satisfies at least one of the following conditions:
(1) a compaction density of the negative electrode film layer is 1.5 g/cm³ to 1.65 g/cm³, optionally, 1.55 g/cm³to 1.65 g/cm³;
(2) a specific surface area of the negative electrode film layer is 0.7 m²/g to 2 m²/g, optionally, 1.0 m²/g to 1.6 m²/g; and
(3) a porosity of the negative electrode film layer is 0.22 to 0.42, optionally, 0.27 to 0.37.

The negative electrode plate satisfies the above conditions, which helps to enable the secondary battery to achieve a good energy density, reduce side reactions of the negative electrode active material during cycling, and/or reduce migration resistance of active ions (such as lithium ions), thereby improving the cycling performance of the secondary battery.

A fourth aspect of the present disclosure provides a power consuming apparatus, including the secondary battery in the third aspect.

### BRIEF DESCRIPTION OF THE DRAWINGS

FIG. 1 is a diagram of a secondary battery according to an implementation of the present disclosure;
FIG. 2 is an exploded view of the secondary battery shown in FIG. 1 according to an implementation of the present disclosure;
FIG. 3 is a diagram of a battery module according to an implementation of the present disclosure;
FIG. 4 is a diagram of a battery pack according to an implementation of the present disclosure;
FIG. 5 is an exploded view of the battery pack shown in FIG. 4 according to an implementation of the present disclosure; and
FIG. 6 is a diagram of a power consuming apparatus using a secondary battery as a power source according to an implementation of the present disclosure.

Descriptions of reference numerals:
1: battery pack; 2: upper box; 3: lower box; 4: battery module; 5: secondary battery; 51: case; 52: electrode assembly; and 53: cover plate.

### DETAILED DESCRIPTION

Implementations of a positive electrode active material and a preparation method therefor, a positive electrode plate, a secondary battery, a battery module, a battery pack, and an electric apparatus of the present disclosure will be properly described below in detail with reference to the accompanying drawings. However, there may be situations where unnecessary detailed explanations are omitted. For example, there are situations where detailed explanations of well-known matters and repeated explanations of actually the same structure are omitted. Thus, the following descriptions do not become unnecessarily lengthy, which facilitates understanding by those skilled in the art. In addition, the drawings and subsequent descriptions are provided for those skilled in the art to fully understand the present disclosure, and are not intended to limit the subject matter recited in the claims.

The "ranges" disclosed in the present disclosure are defined in the form of lower and upper limits, with a given range being defined by the selection of a lower limit and an upper limit defining the boundaries of the particular range. The range defined in this way may include or exclude end values, and may be arbitrarily combined, that is, any lower limit can be combined with any upper limit to form a range. For example, if ranges of 60 to 120 and 80 to 110 are listed for a particular parameter, it is to be understood that ranges of 60 to 110 and 80 to 120 are also expected. In addition, if minimum range values 1 and 2 are listed, and maximum range values 3, 4 and 5 are listed, all of the following ranges can be expected: 1 to 3, 1 to 4, 1 to 5, 2 to 3, 2 to 4, and 2 to 5. In the present disclosure, unless stated otherwise, the numerical range "a to b" represents an abbreviated representation of any combination of real numbers between a to b, where both a and b are real numbers. For example, the numerical range "0 to 5" indicates that all real numbers between 0 and 5 are listed herein, and "0 to 5" is merely an abbreviated representation of the combination of these numbers. In addition, when a parameter is expressed as an integer ≥2, it is equivalent to disclosing that the parameter is, for example, an integer of 2, 3, 4, 5, 6, 7, 8, 9, 10, 11, 12, or the like.

Unless otherwise specified, all the implementations and optional implementations of the present disclosure can be combined with each other to form new technical solutions.

Unless otherwise specified, all technical features and optional technical features of the present disclosure can be combined with each other to form new technical solutions.

Unless otherwise specified, all the steps in the present disclosure can be performed in the order described or in a random order, and preferably in the order described. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, e.g. the method may include steps (a), (b) and (c), or steps (a), (c) and (b), or steps (c), (a) and (b), or the like.

Unless otherwise specifically stated, "include" and "contain" mentioned in the present disclosure indicate open inclusion or closed inclusion. For example, the terms "include" and "contain" may indicate that other components not listed may further be included or contained, or only listed components may be included or contained.

If not specifically stated, in the present disclosure, the term "or" is inclusive. For example, the phrase "A or B" means "A, B, or both A and B". More specifically, any one of the following conditions satisfies the condition "A or B": A is true (or exist) and B is false (or not exist); A is false (or not exist) and B is true (or exist); or both A and B are true (or exist).

A carbon-based negative electrode active material is one of important raw materials of a secondary battery, and has a significant impact on the electrical performance of secondary battery. In a cycling process of the secondary battery, active ions (such as lithium ions and sodium ions) are intercalated into and deintercalated from the carbon-based negative electrode active material, causing the carbon-based negative electrode active material to continuously expand and contract. After the negative electrode active material is graphitized, the orderliness of a crystal structure of the material is improved, which helps to increase an energy density of the negative electrode active material. However, as a graphitization degree of the negative electrode active material increases, an interlayer spacing of the crystal structure of the material is narrowed. In the cycling process of the secondary battery, the interlayer spacing of the negative electrode active material is enlarged, leading to a decrease in stability of the crystal structure of the negative electrode active material and causing cracking and fragmentation of the negative electrode active material, which in turn reduces cycling performance of the secondary battery. In addition, as the interlayer spacing of the negative electrode active material crystal structure is narrowed, a powder compaction density of the negative electrode active material increases. The increased powder compaction density can improve an energy density of the negative electrode active material, but reduces wettability of the negative electrode active material or a negative electrode plate by electrolyte solution, thereby increasing electron migration resistance and polarization loss and affecting the cycling performance of the secondary battery.

Based on this, the present disclosure provides a carbon-based negative electrode active material that can improve the cycling performance of the secondary battery.

### [Negative electrode active material]

The present disclosure provides a carbon-based negative electrode active material. A gram volume of the carbon-based negative electrode active material is 345 mAh/g to 355 mAh/g, and a powder compaction density at a pressure of 20000 N is greater than 1.55 g/cm³ and less than 1.65 g/cm³.

In this article, the term "gram volume" refers to a ratio of an electric capacity released by the carbon-based negative electrode active material to a mass of a carbon material. Generally, a higher gram volume is more advantageous for improving an energy density of a secondary battery.

The gram volume of the carbon-based negative electrode active material is within the range of 345 mAh/g to 355 mAh/g. Lattice expansion during material cycling is relatively small; crystal structure stability is good; and irreversible consumption of active ions is reduced. Meanwhile, the carbon-based negative electrode active material has an excellent electric capacity, which can increase the energy density of the secondary battery, thus improving the cycling performance of the secondary battery.

In some implementations, the gram volume of the carbon-based negative electrode active material is 346 mAh/g to 353 mAh/g. In some implementations, the gram volume of the carbon-based negative electrode active material is 347 mAh/g to 353 mAh/g. In some implementations, the gram volume of the carbon-based negative electrode active material is 345 mAh/g, 346 mAh/g, 347 mAh/g, 348 mAh/g, 349 mAh/g, 350 mAh/g, 351 mAh/g, 352 mAh/g, 353 mAh/g, 354 mAh/g, 355 mAh/g, or within a range between any two of the above values.

When the gram volume is within the range, the carbon-based negative electrode active material has excellent crystal structure stability and electric capacity, significantly improving the cycling performance of the secondary battery.

A measurement method for the gram volume can use any known method in the art. For example, a negative electrode active material sample can be fully stirred and mixed with a carbon black conductive agent and polyvinylidene fluoride (PVDF) in a suitable amount of NMP solvent in a mass ratio of 91.6:1.8:6.6, to form uniform negative electrode slurry. The negative electrode slurry is uniformly applied onto a surface of a negative electrode current collector copper foil and is dried and cold-pressed. Afterwards, a metal lithium sheet is used as a counter electrode. A polypropylene (PP) film is used as a separator, and an electrolyte solution is injected. A used formula of the electrolyte solution is as follows: Dimethyl carbonate (DMC), ethyl methyl carbonate (EMC), and ethylene carbonate (EC) are mixed in a weight ratio of 1:1:1 to obtain an organic solvent, and then LiPF6 is dissolved in the above organic solvent to prepare the electrolyte solution with a concentration of 1.0 mol/L. In an argon-protected glove box, a CR2430 button battery is assembled. At 25°C, the above prepared button battery is discharged at a constant current of 0.05 C to 0.005 V, is then discharged at a constant current of 10 µA to 0.005 V, and stands still for 5 min, and an initial discharge capacity of the button battery is recorded. Afterwards, the button battery is charged at a constant current of 0.1 C to 2.0 V, and charging capacity of the button battery is recorded. A ratio of the charging capacity of the button battery to the mass of the negative electrode active material sample is the gram volume of the negative electrode active material.

Herein, the powder "compaction density" refers to a density of powder to be tested at a predetermined pressure. A larger powder compaction density reflects a higher mass of a powder material per unit volume. For the negative electrode active material, the larger powder compaction density reflects higher electric capacity of the negative electrode active material and is more conductive to increasing the energy density of the secondary battery. After the powder compaction density is increased, an interlayer spacing of crystals of the negative electrode active material may decrease, and the lattice expansion changes greatly, which is not favorable for the structural stability of the negative electrode active material.

In addition, after the powder compaction density of the negative electrode active material is increased, a porosity of the negative electrode active material is decreased correspondingly. The wettability of the negative electrode active material in a battery electrode plate by the electrolyte solution of the secondary battery is affected. This is not conducive to intercalation and deintercalation of active ions in the negative electrode active material and free migration of electrons, and affects the cycling performance of the secondary battery.

A measurement method for the powder compaction density can use any known method in the art. For example, referring to GB/T 24533-2009, 1 g of negative electrode active material powder is weighed and is added into a mold with a bottom area of 1.327 cm². Pressurization is performed to a specific pressure, such as 20000 N or 49000 N. The pressure is relieved for 10 s after being maintained for 30 s. The powder compaction density of the negative electrode active material at the selected pressure is measured through an electronic pressure testing machine (such as a UTM7305 electronic pressure testing machine).

In the existing art, when the gram volume of the negative electrode active material is within the range of 345 mAh/g to 355 mAh/g, the negative electrode active material has a compaction density of not less than 1.65 g/cm³ at the pressure of 20000 N, which cannot balance the structural stability of the material and the cycling performance of the secondary battery. The carbon-based negative electrode active material provided by the present disclosure has the reduced powder compaction density within the gram volume range. This enables the carbon-based negative electrode active material to have an ideal energy density and enables the carbon-based negative electrode active material to have a lower volume expansion rate in a cycling process, so that the structural stability of the negative electrode active material is improved, and the cycling life of the secondary battery is prolonged.

In some implementations, the powder compaction density of the carbon-based negative electrode active material at the pressure of 20000 N is 1.55 g/cm³, 1.56 g/cm³, 1.57 g/cm³, 1.58 g/cm³, 1.59g/cm³, 1.60g/cm³, 1.61g/cm³, 1.62g/cm³, 1.63g/cm³, 1.64g/cm³, 1.65g/cm³, or within a range between any two of the above values. In some implementations, the powder compaction density of the carbon-based negative electrode active material at the pressure of 20000 N is 1.57 g/cm³ to 1.62g/cm³. This can further improve the electric capacity and structural stability of the negative electrode active material and improves the cycling performance of the secondary battery.

In some implementations, the powder compaction density of the carbon-based negative electrode active material at the pressure of 49000 N is greater than 1.73 g/cm³ and less than or equal to 1.84 g/cm³.

In some implementations, the powder compaction density of the carbon-based negative electrode active material at the pressure of 49000 N is 1.73 g/cm³, 1.74 g/cm³, 1.75 g/cm³, 1.76 g/cm³, 1.77 g/cm³, 1.78 g/cm³, 1.79 g/cm³, 1.80 g/cm³, 1.81 g/cm³, 1.82 g/cm³, 1.83 g/cm³, 1.84 g/cm³, or within a range between any two of the above values. This helps to better improve the electric capacity and structural stability of the negative electrode active material and improve the cycling performance of the secondary battery.

In some implementations, the carbon-based negative electrode active material includes primary particles and secondary particles. In some implementations, a quantity proportion of the primary particles in the carbon-based negative electrode active material is greater than or equal to a quantity proportion of the secondary particles in the carbon-based negative electrode active material. It helps to reduce fragmentation of negative electrode active material particles due to expansion and contraction of the carbon-based negative electrode active material in the cycling process and improve the chemical and mechanical stability of the carbon-based negative electrode active material, thus reducing the irreversible consumption of the active ions and improving the cycling performance of the secondary battery.

Herein, the primary particles and the secondary particles are meanings known in the art. Herein, "primary particles" are non-agglomerated state particles. Herein, the "secondary particles" are agglomerated particles formed by agglomeration of two or more primary particles.

The primary particles and the secondary particles can be distinguished by observing cross sections of the particles of the graphite negative electrode active material by using a scanning electron microscope (SEM). In the present disclosure, the quantity proportion of the secondary particles in the graphite negative electrode active material can be tested by using a method known in the art. As an example, a cross-section polishing instrument (such as an IB-09010 CP argon ion cross-section polishing instrument from JEOL, Japan) can be used to prepare a cross section of the negative electrode plate. Then, referring to JY/T010-1996, the cross section of the negative electrode plate is scanned by using the scanning electron microscope (such as a Sigma 300 scanning electron microscope from ZEISS, Germany). A plurality of test regions are randomly selected from the test sample, and images of the plurality of test regions are obtained by using the scanning electron microscope. A proportion, in each image, of a number of the secondary particles in the graphite negative electrode active material to a total number of particles of the graphite negative electrode active material is calculated, and an average value of a plurality of statistical results is the quantity proportion of the secondary particles in the graphite negative electrode active material.

In some implementations, based on the total number of the primary particles and the secondary particles in the graphite negative electrode active material, the quantity proportion of the primary particle can be optionally 50%, 52%, 54%, 56%, 58%, 60%, or within a range between any two of the values.

In the cycling process, the negative electrode active material undergoes repeated expansion and contraction deformation, leading to fragmentation of the particles of the negative electrode active material, which seriously reduces the mechanical integrity of the primary particles and the secondary particles. Meanwhile, the fragmentation of particles increases penetration of the electrolyte solution and a degree of side reactions, thereby increasing the irreversible consumption of the active ions. The graphite negative electrode active material with the secondary particles having a low quantity proportion is conductive to maintaining the integrity of the particles of the graphite negative electrode active material in a battery preparation process, reducing generation of new interfaces, lowering the consumption of active lithium in the cycling process, and further improving the cycling stability of the secondary battery. Meanwhile, a particular number of secondary particles can reduce the expansion of the negative electrode plate while balancing the dynamic performance of the secondary battery, thereby enabling a battery cell to have a dynamic window throughout its entire life cycle. A sharp decline in battery capacity and a sharp deterioration in battery life due to non-uniform distribution of current are avoided, thus comprehensively improving the cycling stability of the battery.

In some implementations, a particle size distribution K of the carbon-based negative electrode active material is 1.0 to 1.6, and K=(Dv90-Dv10)/Dv50. In some implementations, a particle size distribution K of the carbon-based negative electrode active material is 1.1 to 1.5. In some embodiments, a particle size distribution K of the carbon-based negative electrode active material is 1.0, 1.05, 1.1, 1.15, 1.2, 1.25, 1.3, 1.35, 1.4, 1.45, 1.5, 1.6, or within a range between any two of the above values. This helps to improve the concentration of the particle size of the negative electrode active material, reduce the non-uniform distribution of the active ions in the negative electrode active material due to a large particle size difference, reduce side reactions between a negative electrode active material with a smaller particle size and the electrolyte solution, and improve the cycling performance of the secondary battery.

In some implementations, a volume distribution particle size Dv50 of the carbon-based negative electrode active material is 8 µm to 13 µm. In some implementations, a volume distribution particle size Dv50 of the carbon-based negative electrode active material is 9 µm to 12 µm. In some implementations, a volume distribution particle size Dv50 of the carbon-based negative electrode active material is 8.0 µm, 8.5 µm, 9.0 µm, 9.5 µm, 10.0 µm, 10.5 µm, 11.0 µm, 11.5 µm, 12.0 µm, 12.5 µm, 13.0 µm, or within a range between any two of the above values. Paths of intercalation and deintercalation of the active ions are shorter. This is conductive to improving active ion and electron transport performance and is also conductive to forming a proper pore structure between particles in a negative electrode film layer, thereby further improving the cycling performance and/or rate performance of the secondary battery.

In the present disclosure, the volume distribution particle size Dv50 of the carbon-based negative electrode material is a meaning known in the art, which refers to a particle size at which a cumulative volume distribution percentage of the material reaches 50% and can be measured by using an instrument and method that are known in the art. For example, referring to GB/T 19077-2016, a laser particle size analyzer can be used for measurement. A testing instrument can be a Mastersizer 3000 laser particle size analyzer from Malvern Instruments Ltd.

In some implementations, a graphitization degree of the carbon-based negative electrode active material is 88% to 95%. In some implementations, a graphitization degree of the carbon-based negative electrode active material is 88%, 89%, 90%, 90.4%, 91.1%, 92.3%, 93.5%, 94.1%, 94.7%, 95%, or within a range between any two of the above values. This is conductive to enabling the negative electrode active material to have an excellent gram volume and good active ion transport performance, thereby enabling the secondary battery to achieve both high energy density and good dynamic performance.

In the present disclosure, the graphitization degree of the carbon-based negative electrode active material is a meaning known in the art and can be tested by using an instrument and method that are known in the art. For example, an X-ray diffractometer (such as Bruker D8 Discover) can be used for testing. The testing can be found in JISK 0131-1996 and JB/T 4220-2011 to obtain an average interlayer spacing d002 of a C(002) crystal plane in a crystal structure of the material. Then, the graphitization degree can be calculated based on a formula g=(0.344-d002)/(0.344-0.3354) × 100%. In the above formula, d002 is the average interlayer spacing of the C(002) crystal plane in the crystal structure of the material expressed in nanometers (nm).

The graphitization degree reflects integrity of a graphite crystal structure in the material, that is, the degree of order in arrangement of carbon atoms in the graphite structure of the material. A large graphitization degree of the material indicates a smaller graphite interlayer spacing, smaller lattice rotation and less scattered stacking of layers. The arrangement is more orderly, and the gram volume of the material is large. A small graphitization degree of the material indicates a large graphite spacing. This is conducive to implementing rapid deintercalation of the active ions and improving the rate performance of the battery. Moreover, a large graphite spacing and small expansion of the material during lithium insertion achieve an effect of shallow charging and shallow discharging. Meanwhile, if the graphitization degree of the material is small, there are many SP³ bonds in the graphite material, so that the layers of the graphite material are mutually constrained, thereby making the structure of the graphite material more stable. The graphite material has excellent stability during cycling, which facilitates long cycling.

In some implementations, a specific surface area of the carbon-based negative electrode active material is 1.25 m²/g to 1.95 m²/g. In some implementations, a specific surface area of the carbon-based negative electrode active material is 1.25 m²/g to 1.85m²/g. In some implementations, a specific surface area of the carbon-based negative electrode active material is 1.25 m²/g, 1.3 m²/g, 1.35 m²/g, 1.45 m²/g, 1.5 m²/g, 1.55 m²/g, 1.6 m²/g, 1.65 m²/g, 1.7 m²/g, 1.75 m²/g, 1.8 m²/g, 1.9 m²/g, 1.95 m²/g, or within a range between any two of the above values. This helps to reduce the side reactions between the negative electrode active material and the electrolyte solution, reduce the irreversible active consumption of metal ions, and improve the cycling performance of the secondary battery.

In some implementations, a tap density of the carbon-based negative electrode active material layer is 1.07 g/cm³ to 1.27 g/cm³. In some implementations, a tap density of the carbon-based negative electrode active material layer is 1.07 g/cm³, 1.1 g/cm³, 1.15 g/cm³, 1.18 g/cm³, 1.2 g/cm³, 1.23 g/cm³, 1.27 g/cm³, or within a range between any two of the above values. This helps to improve the active ion and electron transport performance and improve the dynamic performance of the secondary battery.

In some implementations, the carbon-based negative electrode active material is synthetic graphite.

### [Preparation method for a negative electrode active material]

The present disclosure further provides a preparation method for a carbon-based negative electrode active material. The preparation method includes the following steps: provide a raw material; treat the raw material to obtain an intermediate product; graphitize the intermediate product to obtain the carbon-based negative electrode active material. A gram volume of the carbon-based negative electrode active material is 345 mAh/g to 355 mAh/g, and a powder compaction density at a pressure of 20000 N is greater than 1.55 g/cm³ and less than 1.65 g/cm³. The secondary battery prepared from the carbon-based negative electrode active material has a high energy density while having good cycling performance.

Herein, the term "graphitizing" refers to a high-temperature heat treatment process of a carbon material. Under the action of a high temperature, the carbon material undergoes a process of "microcrystalline" growth, transforming from a two-dimensional structure of a carbon network to a three-dimensional ordered structure.

In some implementations, maximum power of the graphitizing is 70% to 90% of rated power of graphitizing equipment.

In some implementations, power of the graphitizing can be optionally 70%, 75%, 80%, 85%, or 90% of the rated power of the equipment, or within a range between any two of the above values.

It can be understood that the graphitizing equipment refers to any device capable of implementing graphitizing, including but not limited to an Acheson furnace, a box-type furnace, an internal furnace, continuous graphitization, an electric calcination furnace, an intermediate-frequency furnace, a tube furnace, or the like. The rated powers of the graphitizing equipment produced by different manufacturers may vary, and can be selected based on an actual situation.

The graphitizing power used in the present disclosure needs to be less than the rated power of the graphitizing equipment to achieve uniformity of a temperature field in the graphitizing process, to ensure consistency of the gram volume of the material, which is conductive to prolonging the cycle life of the battery.

In some implementations, the graphitizing equipment is the internal furnace with rated power of 25000 W to 32000 W.

In some implementations, the graphitizing equipment is the Acheson furnace with rated power of 28000 W to 30000 W.

In some implementations, a temperature of the graphitizing is 2600°C to 3000°C.

In some implementations, a temperature of the graphitizing is 2600°C, 2700°C, 2800°C, 2900°C, 3000°C, or within a range between any two of the above values.

In some implementations, time of the graphitizing is 10 h to 50 h.

In some implementations, time of the graphitizing is 10 h, 15 h, 20 h, 25 h, 30 h, 35 h, 40 h, 45 h, 50 h, or within a range between any two of the above values.

In some implementations, the graphitizing equipment is the internal furnace, and duration of the graphitizing at the maximum power is 10 h to 30 h.

In some implementations, the graphitizing equipment is the Acheson furnace, and duration of the graphitizing at the maximum power is 30 h to 50 h.

In some implementations, the raw material includes at least one of a petroleum coke, a needle coke, and a pitch coke. In some implementations, the raw material is the needle coke.

Herein, the term "petroleum coke" refers to coke formed by performing high-temperature carbonization on petroleum residue oil or petroleum asphalt.

Herein, the term "needle coke" refers to needle-textured coke generated by performing liquid-phase carbonization on coal-tar pitch or petroleum asphalt to form an anisotropic intermediate phase, and performing high-temperature carbonization or another process.

Herein, the term "pitch coke" refers to a solid material generated after high-temperature carbonization is performed on coal-tar pitch.

In some implementations, a volume proportion of a fibrous structure in the raw material is greater than or equal to 55%. In some implementations, a volume proportion of a fibrous structure in the raw material is 58% to 70%.

The needle coke has a series of advantages such as low thermal expansion coefficient, low porosity, low sulfur, low ash content, low metal content, high conductivity, easy graphitization, and the like. The graphite material subjected to the graphitizing can achieve a high ultimate compaction density and has a low cyclic expansion rate.

The coke raw material usually includes at least one of a mosaic structure, a domain structure, and a fibrous structure. Usually, based on a morphological characteristic of the coke raw material under a polarizing microscope and a size of an isochromatic region, a microstructure of the isochromatic region with a size less than 30 µm is determined as a mosaic structure. The microstructure of the isochromatic region with a size greater than 30 µm is determined as a domain structure, and an anisotropic strip-shaped isochromatic region is determined as a fibrous structure.

Herein, the "fibrous structure", also known as a streamlined structure, refers to a structure of the raw material with an obvious fibrous texture observed under a microscope.

In the present disclosure, the volume proportion of the fibrous structure in the raw material can be tested by using a method known in the art. As an example, the raw material is taken based on the regulation of GB 1997-89 and is crushed to 1 mm. The raw material is mixed uniformly, and sample division is performed to obtain 40 g to 50 g of the raw material. A square hole sieve is used to obtain 4 g to 5 g of 0.07 mm to 1.0 mm grade test sample for plate preparation. Powder coke and lump coke plates are prepared based on MT 116.1-86 regulations. A diameter of the powder coke plate is not less than 22 mm, and a volume occupied by cement is to be less than 1/3. The test sample is placed on a slide with clay and is flattened. The test sample is then placed on a stage for focusing. After the microscope is corrected, a polarizer and an analyzer are adjusted to make them orthogonal. An azurite detection board (1λ) is inserted to present a first-order red interference color in a field of view. A step size of a mechanical stage is determined to ensure that more than 400 effective measuring points are uniformly distributed, with a point spacing of 0.3 mm to 0.5 mm and a line spacing of generally 0.5 mm to 0.8 mm. Starting from one end of the test sample, a microstructure category at an intersection of cross wires is determined, and the number of the effective measuring points of the fibrous structure optical tissue is divided by a total number of statistical testing points to obtain the volume proportion of fibrous structure in the raw material.

In some implementations, based on the total volume of the raw material structure, the proportion of the fibrous structure in the coke raw material is optionally 55%, 58%, 60%, 63%, 65%, 68%, 70%, or within a range between any two of the above values. A raw material with more fibrous structures is conductive to improving the compaction density and gram volume of the graphitized negative electrode active material, so that the graphitized negative electrode active material retains high integrity in the compaction process, and a battery has a good energy density while maintaining a high cycle life. However, an excessively high proportion of the fibrous structure can increase the costs and expansion rate of the graphitized negative electrode active material and reduce the dynamic performance. The raw material with the volume percentage of the fibrous structure within the above range not only has lower costs, but also enables the graphite to have a good gram volume and a battery cell to have a dynamic window throughout its entire life cycle, thereby comprehensively improving the long-term cycle life and electrochemical performance of the battery.

By selecting the coke raw material with the volume proportion of the fibrous structure greater than or equal to 55% and less than or equal to 70%, under the same graphitizing condition, the crystal structure of the negative electrode active material has a larger interlayer spacing and also has excellent structural stability while having good electric capacity. Meanwhile, the powder compaction density of the carbon-based negative electrode active material is lower (less than 1.65 g/cm³), which is conductive to balancing the structural stability and the electric capacity of the carbon-based negative electrode active material.

In some implementations, the maximum gram volume that the raw material can achieve is greater than the gram volume of the graphite negative electrode active material.

By using the high-grade raw material and controlling the graphitization degree, the maximum gram volume that the raw material can achieve will not be fully exerted, so as to reduce the cyclic expansion of the graphite negative electrode active material and improve the cycling stability of the graphite negative electrode active material.

In some implementations, the treating the raw material specifically includes: crush, shape, and grade the raw material to obtain a first precursor; pellet the first precursor to obtain a second precursor; and perform low-temperature carbonization on a mixture of the first precursor and the second precursor to obtain the intermediate product.

Crushing is a process for reducing the particle size of the raw material. The raw material can be crushed through a crushing machine, a mechanical mill, or any mechanical device.

Shaping and grading are a process of adjusting the particle size distribution of the raw material to obtain the first precursor that meets a particle size requirement. The particle size and particle size distribution of the first precursor can be controlled by adjusting a grading frequency and an air inlet volume. In some implementations, a grading frequency in the grading process is 40 Hz to 50 Hz, and an air door opening degree is 20% to 70%.

Pelleting is a process for adding a bonding material into a set amount of the first precursor for pelleting. The bonding material can be any substance known in the art, which can be used to prepare the negative electrode active material, such as one or more of coal tar pitch, petroleum asphalt, a polymer compound, and resin. After being heated and melted, the bonding material has low viscosity and maintains good fluidity, so that agglomeration of the raw material particles in the subsequent preparation process can be reduced. Thus, problems of an increase in defects on surfaces of the particles of the carbon-based negative electrode active material, an increase in active sites on the surfaces, and the like, which are caused by adding a depolymerization procedure, can also be reduced.

Low-temperature carbonization on the first precursor and the second precursor to obtain the intermediate product includes performing low-temperature carbonization on the mixture of the first precursor and the second precursor to obtain the intermediate product. The low-temperature carbonization also includes respectively performing low-temperature carbonization on the first precursor and the second precursor to obtain a first intermediate product and a second intermediate product respectively.

In some implementations, a volume distribution particle size Dv50 of the first precursor is 6.5 µm to 10.5 m. In some implementations, a volume distribution particle size Dv50 of the first precursor is 6.5 µm, 7.0 µm, 8.0 µm, 9.0 µm, 10.0 µm, 10.5 µm, or within a range between any two of the above values.

In some implementations, a particle size distribution (Dv90-DV10)/DV50 (or K) of the first precursor is 1.05 to 1.75. In some implementations, a particle size distribution (Dv90-DV10)/DV50 (or K) of the first precursor is 1.05, 1.15, 1.25, 1.35, 1.45, 1.55, 1.65, 1.75, or within a range between any two of the above values.

In some implementations, a tap density of the first precursor is 0.55 g/cm³ to 0.75 g/cm³.

In some implementations, a tap density of the first precursor is 0.55 g/cm³, 0.6 g/cm³, 0.65 g/cm³, 0.7 g/cm³, 0.75 g/cm³, or within a range between any two of the above values.

In some implementations, a particle size Dv50 of the second precursor is 11.0 µm to 15.0 µm.

In some implementations, a particle size Dv50 of the second precursor is 11.0 µm, 12.0 µm, 13.0 µm, 14.0 µm, 15.0 µm, or within a range between any two of the above values.

The second precursor is obtained by pelleting the first precursor. Therefore, the second precursor mainly forms the secondary particles in the graphite negative electrode active material.

Controlling the particle sizes of the first precursor and the second precursor within the above ranges helps to adjust the particle size and particle size distribution of the graphite negative electrode active material and improve the cycling stability of the battery.

In some implementations, a temperature of the low-temperature carbonization is 900°C to 1300°C, and time of the low-temperature carbonization is 24 h to 240 h.

In some implementations, a temperature of the low-temperature carbonization is optionally 900°C, 1000°C, 1100°C, 1200°C, 1300°C, or within a range between any two of the above values.

In some implementations, time of the low-temperature carbonization is optionally 24 h, 50 h, 75 h, 100 h, 150 h, 200 h, 240 h, or within a range between any two of the above values.

In some embodiments, a graphitized product of the first precursor and a graphitized product of the second precursor are mixed in a mass ratio of (1:1) to (6:4), to obtain the carbon-based negative electrode active material. This can improve the chemical and mechanical performance of the negative electrode active material in the cycling process, and also enable the negative electrode film to have a proper pore structure, thus reducing the irreversible consumption of the active ions, improving the active ion transport performance, and improving the cycling performance of the secondary battery.

In some embodiments, the precursor is further screened and demagnetized after being graphitized.

In some implementations, the primary particle graphitized product and the secondary particle graphitized product are mixed in a mass ratio of (1:1) to (6:4), such as 50:50, 55:45, or 60:40, after being screened and demagnetized.

In addition, the secondary battery, the battery module, the battery pack, and the power consuming apparatus of the present disclosure are described below by appropriately referring to the accompanying drawings.

In an implementation of the present disclosure, a secondary battery is provided.

Generally, the secondary battery includes a positive electrode plate, a negative electrode plate, an electrolyte, and a separator. During charging and discharging of the battery, active ions move between the positive electrode plate and the negative electrode plate for intercalation and deintercalation. The electrolyte is provided between the positive electrode plate and the negative electrode plate for ion conduction. The separator is arranged between the positive electrode plate and the negative electrode plate, and is mainly configured to prevent a short circuit between positive and negative electrodes while allowing ions to pass through.

### [Positive electrode plate]

The positive electrode plate includes a positive electrode current collector and a positive electrode film layer arranged on at least one surface of the positive electrode current collector. The positive electrode film layer includes a positive electrode active material.

As an example, the positive electrode current collector has two opposite surfaces in a thickness direction of the positive electrode current collector, and the positive electrode film layer is arranged on either or both of the two opposite surfaces of the positive electrode current collector.

In some implementations, the positive electrode current collector may be a metal foil or a composite current collector. For example, the metal foil may be an aluminum foil. The composite current collector can include a polymer material substrate layer and a metal layer formed on at least one surface of the polymer material substrate. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some implementations, the positive electrode active material may be a positive electrode active material used for a battery, which is known in the art. As an example, the positive electrode active material may include at least one of the following materials: a lithium-containing phosphate of an olivine structure, a lithium transition metal oxide, and their respective modified compounds. However, the present disclosure is not limited to these materials, and may alternatively use another traditional material that may be used as a positive electrode active material for the battery. Only one or a combination of two or more of these positive electrode active materials may be used. Examples of the lithium transition metal oxide may include but are not limited to at least one of: a lithium-cobalt oxide (e.g. LiCoO₂), a lithium-nickel oxide (e.g. LiNiO₂), a lithium-manganese oxide (e.g. LiMnO₂ and LiMn₂O₄), a lithium-nickel-cobalt oxide, a lithium-manganese-cobalt oxide, a lithium-nickel-manganese oxide, a lithium-nickel-cobalt-manganese oxide (e.g. LiNi_{1/3}Co_{1/3}Mn_{1/3}O₂, or referred to as NCM₃₃₃), LiNi_{0.5}Co_{0.2}Mn_{0.3}O₂ (or referred to as NCM₅₂₃), LiNi_{0.5}Co_{0.25}Mn_{0.25}O₂ (or referred to as NCM₂₁₁), LiNi_{0.6}Co_{0.2}Mn_{0.2}O₂ (or referred to as NCM₆₂₂), LiNi_{0.8}Co_{0.1}Mn_{0.1}O₂ (or referred to as NCM₈₁₁), a lithium-nickel-cobalt-aluminum oxide (e.g. LiNi_{0.85}Co_{0.15}Al_{0.05}O₂), and modified compounds thereof. An example of the lithium-containing phosphate of the olivine structure may include, but is not limited to, at least one of lithium iron phosphate (for example, LiFePO₄ (also referred to as LFP)), a composite material of lithium iron phosphate and carbon, lithium manganese phosphate (for example, LiMnPO₄), a composite material of lithium manganese phosphate and carbon, lithium iron manganese phosphate, and a composite material of lithium manganese iron phosphate and carbon.

In some implementations, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some implementations, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some implementations, the positive electrode plate may be prepared by the following mode: disperse the above components for preparing the positive electrode plate, for example, the positive electrode active material, the conductive agent, the binder, and any other components, in a solvent (for example, N-methylpyrrolidone) to form a positive electrode slurry; and apply the positive electrode slurry onto the positive electrode current collector, followed by drying, cold pressing, and other procedures, to obtain the positive electrode plate.

### [Negative electrode plate]

The negative electrode plate includes a negative electrode current collector and a negative electrode film layer arranged on at least one surface of the negative electrode current collector. The negative electrode film layer includes the above carbon-based negative electrode active material.

As an example, the negative electrode current collector has two opposite surfaces in a thickness direction of the negative electrode current collector, and the negative electrode film layer is arranged on either or both of the two opposite surfaces of the negative electrode current collector.

In some embodiments, the negative electrode film layer may further include another negative electrode active material in addition to the above carbon-based negative electrode active material. In some embodiments, the another negative electrode active material includes, but is not limited to, one or more of natural graphite, other synthetic graphite, hard carbon, soft carbon, a silicon-based material, a tin-based material, and lithium titanate. The silicon-based material may include one or more of elemental silicon, silicon oxide, a silicon-carbon composite, a silicon-nitrogen composite, and a silicon alloy material. The tin-based material may include one or more of elemental tin, tin oxide, or a tin alloy material.

In some implementations, the negative electrode current collector may be a metal foil or a composite current collector. For example, the metal foil may be a copper foil. The composite current collector may include a polymer material substrate layer and a metal layer formed on at least one surface of the polymer material substrate layer. The composite current collector may be formed by forming a metal material (copper, copper alloy, nickel, nickel alloy, titanium, titanium alloy, silver, silver alloy, or the like) on the polymer material substrate (for example, a substrate of polypropylene (PP), polyethylene terephthalate (PET), polybutylene terephthalate (PBT), polystyrene (PS), or polyethylene (PE)).

In some implementations, the negative electrode film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some implementations, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode film layer further optionally includes another additive such as a thickener (for example, sodium carboxymethyl cellulose (CMC-Na)).

In some implementations, the negative electrode plate may be prepared by the following mode: disperse the above components for preparing the negative electrode plate, for example, the negative electrode active material, the conductive agent, the binder, and any other components, in a solvent (for example, deionized water) to form a negative electrode slurry; and apply the negative electrode slurry onto the negative electrode current collector, followed by drying, cold pressing, and other procedures, to obtain the negative electrode plate with a negative electrode film layer.

In some implementations, the compaction density of the negative electrode film layer is 1.5 g/cm³ to 1.65 g/cm³. In some implementations, the compaction density of the negative electrode film layer is 1.55g/cm³ to 1.65 g/cm³. The compaction density of the negative electrode film layer within this range helps to control the energy density of the secondary battery, thus improving the cycling performance of the second battery.

In some implementations, a specific surface area of the negative electrode film layer is 0.7 m²/g to 2 m²/g. In some implementations, a specific surface area of the negative electrode film layer is 1.0m²/g to 1.6m²/g. The specific surface area of the negative electrode film layer within this range helps to control a contact area of the negative electrode film layer with the electrolyte solution, reduce side reactions of the carbon-based negative electrode active material in the negative electrode plate, and reduce the irreversible consumption of the active ions, thus improving the cycling performance of the secondary battery.

In some implementations, a porosity of the negative electrode film layer is 0.22 to 0.42. In some implementations, a porosity of the negative electrode film layer is 0.27 to 0.37. The porosity of the negative electrode film layer within this range helps to reduce the migration resistance to the active ions and the electrons and improve the dynamic performance of the secondary battery.

The compaction density of the negative electrode film layer may be measured by using a method that is known in the art. As an example, an electronic balance is used to weigh a negative electrode plate test sample with an area of S, and a weight is denoted as W1. A thickness T1 of the negative electrode plate is measured by using a micrometer caliper. Then the weighed electrode film layer is wiped off, and the negative electrode current collector is weighed and a weight is denoted as W2. A thickness T2 of the negative electrode current collector is measured by using the micrometer caliper. The compaction density PD of the negative electrode film layer is (W1-W2)/[(T1-T2)×S].

The specific surface area of the negative electrode film layer can be tested by using a method that is known in the art. As an example, the specific surface area of the negative electrode film layer can be measured through a nitrogen adsorption/desorption method by using a specific surface area analyzer (e.g. TriStar 3020 from Micromeritics) based on a specific surface area measurement method in GB/T 19587-2017. The negative electrode film layer is dried in a vacuum drying oven and is then put into a sample tube for measurement in the analyzer.

The porosity P of the negative electrode film layer can be tested by using a method known in the art. As an example, referring to GB/T21650.2-2008, the porosity P of the negative electrode plate is measured by a nitrogen adsorption method, which is a percentage of a pore volume in the negative electrode plate to a total volume of the negative electrode plate. A calculation formula is P=(V1-V2)/V1 × 100%, where V1 is an apparent volume of the electrode plate sample and V2 is a true volume of the electrode plate sample. The apparent volume V1 of the electrode plate sample is calculated based on a formula V1=S × H × A, where S represents the area (unit: cm²) of the negative electrode plate; H represents a thickness of the negative electrode plate (unit: cm); and A represents a number of samples (unit: ea). Specific testing steps are as follows: in a conventional laboratory environment, use tweezers to select no less than 20 electrode plate discs with intact appearance and no edge powder shedding, place the electrode plate discs into a sample cup, record the number of plate discs, and calculate the apparent volume V1; after the sample electrode plates are put into a 3.5 cm³ sample cup, place the sample cup in a true density tester, seal a testing system, introduce ammonia gas according to a programmed procedure, detect pressures of gas in a sample chamber and an expansion chamber, and calculate the true volume V2 based on the Bohr's law (PV=nRT) to obtain the porosity of the negative electrode film layer to be tested.

### [Electrolyte]

The electrolyte is provided between the positive electrode plate and the negative electrode plate for ion conduction. A type of the electrolyte is not specifically limited in the present disclosure, and may be selected according to requirements. For example, the electrolyte may be liquid, gelled, or all solid.

In some implementations, the electrolyte uses an electrolyte solution. The electrolyte solution includes an electrolyte salt and a solvent.

In some implementations, the electrolyte salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some implementations, the electrolyte solution optionally includes an additive. For example, the additive may include a negative electrode film forming additive, a positive electrode film forming additive, and may further include an additive that can improve particular battery performance, for example, an additive that improves battery overcharging performance, an additive that improves high or low temperature performance of the battery, or the like.

### [Separator]

In some implementations, the secondary battery further includes a separator. A type of the separator is not particularly limited in the present disclosure, and any well-known separator with a porous structure having good chemical stability and mechanical stability may be selected.

In some implementations, a material of the separator may be at least one of a glass fiber, a non-woven fabric, polyethylene, polypropylene, or polyvinylidene fluoride. The separator may be a single-layer film or a multilayer composite film, without special limitations. When the separator is the multilayer composite film, materials of layers may be the same or different, without special limitations.

In some implementations, the positive electrode plate, the negative electrode plate, and the separator may be made into an electrode assembly by a winding process or a lamination process.

In some implementations, the secondary battery may include an outer package. The outer packaging may be used for packaging the foregoing electrode assembly and the electrolyte.

In some implementations, the outer package of the secondary battery may be a hard case, such as a hard plastic case, an aluminum case, a steel case, or the like. The outer package of the secondary battery may alternatively be a soft package such as a pouch-type soft package. A material of the soft package may be plastic, and examples of plastic may include polypropylene, polybutylene terephthalate, polybutylene succinate, and the like.

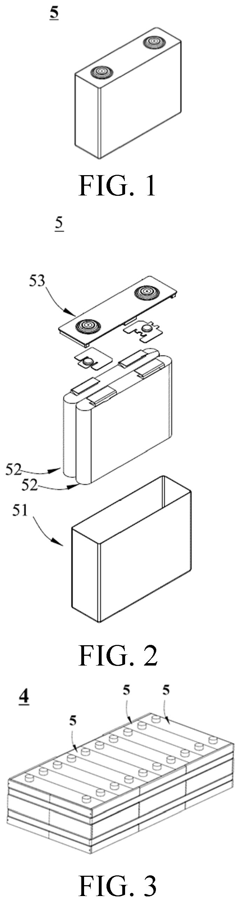

A shape of the secondary battery is not particularly limited in the present disclosure, and the secondary battery may be cylindrical, square, or in any other shape. For example, FIG. 1 is a secondary battery 5 of a square structure as an example.

In some implementations, referring to FIG. 2, the outer package may include a case 51 and a cover plate 53. The case 51 may include a bottom plate and a side plate connected to the bottom plate, and an accommodating cavity is enclosed by the bottom plate and the side plate. The case 51 has an opening that communicates with the accommodating cavity, and the cover plate 53 may cover the opening to close the accommodating cavity. The positive electrode plate, the negative electrode plate, and the separator may form an electrode assembly 52 through a winding process or a lamination process. The electrode assembly 52 is encapsulated in the accommodating cavity. An electrolyte solution infiltrates into the electrode assembly 52. The secondary battery 5 may include one or more electrode assemblies 52, which may be selected by those skilled in the art according to specific actual requirements.

In some implementations, the secondary battery may be assembled into a battery module. The battery module may include one or more secondary batteries, and the exact number may be selected by those skilled in the art based on usage and capacity of the battery module.

FIG. 3 is a battery module 4 as an example. Referring to FIG. 3, in the battery module 4, a plurality of secondary batteries 5 may be sequentially arranged in a length direction of the battery module 4. Certainly, the secondary batteries may be arranged in any other way. The plurality of secondary batteries 5 may further be fixed by fasteners.

Optionally, the battery module 4 may further include a shell with an accommodating space, and the plurality of secondary batteries 5 are accommodated in the accommodating space.

In some implementations, the above battery module may further be assembled into a battery pack. The battery pack may include one or more battery modules, and the exact number may be selected by those skilled in the art based on usage and capacity of the battery pack.

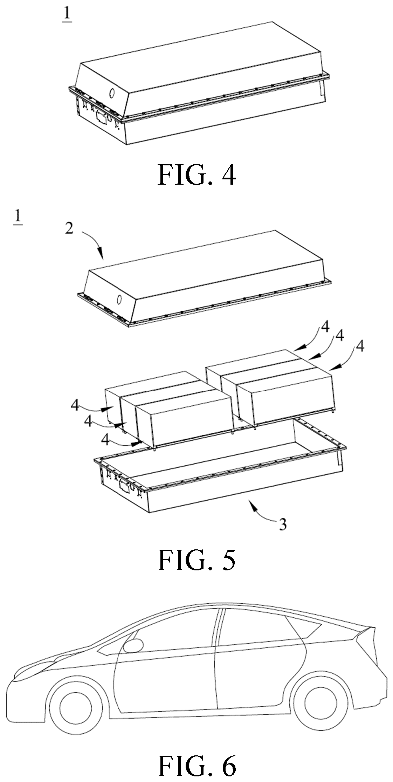

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box 2 and a lower box 3. The upper box 2 may cover the lower box 3 to form a closed space for accommodating the battery modules 4. The plurality of battery modules 4 may be arranged in the battery box in any manner.

In addition, present disclosure further provides a power consuming apparatus. The power consuming apparatus includes at least one of the secondary battery, the battery module, or the battery pack provided in present disclosure. The secondary battery, the battery module, or the battery pack can be used as a power source of the power consuming apparatus, and can also be used as an energy storage unit of the power consuming apparatus. The power consuming apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

For the power consuming apparatus, the secondary battery, the battery module, or the battery pack may be selected based on usage requirements.

FIG. 6 shows a power consuming apparatus used as an example. The power consuming apparatus is an all-electric vehicle, a hybrid electric vehicle, a plug-in hybrid electric vehicle, or the like. To meet the requirements of the power consuming apparatus for high power and a high energy density of a secondary battery, a battery pack or a battery module may be used.

The apparatus used as another example may be, for example, a mobile phone, a tablet computer, a laptop computer, or the like. The apparatus is generally required to be light and thin, and may use a secondary battery as a power source.

### Embodiments

The embodiments of the present disclosure will be described below. The embodiments described below are exemplary and used only for explaining the present disclosure, and should not be construed as a limitation on the present disclosure. If the specific technology or conditions are not specified in the embodiments, the technology or conditions described in the literature in the art or the product manual shall be followed. The used reagents or instruments without manufacturer indicated are all conventional products that may be purchased in the market.

### I. Performance test on the negative electrode active material and the secondary battery

### 1. Test of the powder compaction density

Referring to GB/T 24533-2009, 1 g of negative electrode active material powder is weighed and is added into a mold with a bottom area of 1.327 cm². Pressurization is performed to 20000 N. The pressure is relieved for 10 s after being maintained for 30 s. The powder compaction density of the negative electrode active material at the pressure of 20000 N is measured through an electronic pressure testing machine (such as a UTM7305 electronic pressure testing machine).

Referring to GB/T 24533-2009, 1 g of negative electrode active material powder is weighed and is added into a mold with a bottom area of 1.327 cm². Pressurization is performed to 49000 N. The pressure is relieved for 10 s after being maintained for 30 s. The powder compaction density of the carbon material at the pressure of 49000 N is measured through an electronic pressure testing machine (such as a UTM7305 electronic pressure testing machine).

### 2. Test of the particle size of powder and test of the particle size distribution

Measurement method: Referring to a particle size distribution laser diffraction method in GB/T 19077-2016, a Mastersizer 2000E laser particle size analyzer from Malvern Instruments Co., Ltd. is used for measurement to obtain volume distribution particle sizes Dv10, Dv50, and Dv90 and a particle size distribution.

### 3. Test of the gram volume of the negative electrode active material

A negative electrode active material sample can be fully stirred and mixed with a carbon black conductive agent and polyvinylidene fluoride (PVDF) in a suitable amount of NMP solvent in a mass ratio of 91.6:1.8:6.6, to form uniform negative electrode slurry. The negative electrode slurry is uniformly applied onto a surface of a negative electrode current collector copper foil and is dried and cold-pressed. Afterwards, a metal lithium sheet is used as a counter electrode. A polypropylene (PP) film is used as a separator, and an electrolyte solution is injected. A used formula of the electrolyte solution is as follows: Dimethyl carbonate (DMC), ethyl methyl carbonate (EMC), and ethylene carbonate (EC) are mixed in a weight ratio of 1:1:1 to obtain an organic solvent, and then LiPF6 is dissolved in the above organic solvent to prepare the electrolyte solution with a concentration of 1.0 mol/L. In an argon-protected glove box, a CR2430 button battery is assembled. At 25°C, the above prepared button battery is discharged at a constant current of 0.05 C to 0.005 V, is then discharged at a constant current of 10 µA to 0.005 V, and stands still for 5 min, and an initial discharge capacity of the button battery is recorded. Afterwards, the button battery is charged at a constant current of 0.1 C to 2.0 V, and charging capacity of the button battery is recorded. A ratio of the charging capacity of the button battery to the mass of the negative electrode active material sample is the gram volume of the negative electrode active material.

### 4. Test of the cycling performance of the secondary battery

At 60°C, the prepared secondary battery is charged to a voltage of 3.65 V at a constant current of 1 C and then charged at a constant voltage of 3.65 V until the current is less than or equal to 0.05 C, and then the battery is discharged to a voltage of 2.5 V at a constant current of 1 C. This is a charge and discharge process. A discharge capacity C1 at an initial cycle is recorded. In this way, the charge and discharge cycle is repeatedly performed. The test is stopped until the capacity of the battery is attenuated to 80% of the initial capacity C1, and a number of cycle tests is recorded.

### 5. Test of the volume proportion of the fibrous structure in the coke raw material

The raw material is taken based on the regulation of GB 1997-89 and is crushed to 1 mm. The raw material is mixed uniformly, and sample division is performed to obtain 40 g to 50 g of the raw material. A square hole sieve is used to obtain 4 g to 5 g of 0.07 mm to 1.0 mm grade test sample for plate preparation. Powder coke and lump coke plates are prepared based on MT 116.1-86 regulations. A diameter of the powder coke plate is not less than 22 mm, and a volume occupied by cement is to be less than 1/3. The test sample is placed on a slide with clay and is flattened. The test sample is then placed on a stage for focusing. After the microscope is corrected, a polarizer and an analyzer are adjusted to make them orthogonal. An azurite detection board (1λ) is inserted to present a first-order red interference color in a field of view. A step size of a mechanical stage is determined to ensure that more than 400 effective measuring points are uniformly distributed, with a point spacing of 0.3 mm to 0.5 mm and a line spacing of generally 0.5 mm to 0.8 mm. Starting from one end of the test sample, a microstructure category at an intersection of cross wires is determined, and the number of the effective measuring points of the fibrous structure optical tissue is divided by a total number of statistical testing points to obtain the volume proportion of fibrous structure in the raw material.

### II. Preparation of the secondary battery

### Embodiment 1

### 1) Preparation of the carbon-based negative electrode active material

A needle coke with a fibrous structure having a volume proportion of 61.0% is crushed. The crushed material is shaped, and fine powder is removed, to obtain the first precursor. The first precursor has a particle size Dv50 of 9.4 µm, a particle size distribution (Dv90-Dv10)/Dv50 of 1.19, and a tap density of 0.68g/cm³.

The first precursor is pelleted and reshaped in a reaction kettle to obtain the second precursor with a particle size Dv50 of 14.1 µm.

The first precursor and the second precursor are respectively put into a kiln for carbonization at a carbonization temperature of 1100°C. Duration of the high temperature is 24 h, thus respectively obtaining a first intermediate product and a second intermediate product. A tap density of the first intermediate product is 0.96 g/cm³, and a tap density of the second intermediate product is 0.92 g/cm³.

The first intermediate product and the second intermediate product are respectively graphitized at a temperature of 2800°C. The graphitizing apparatus is the internal furnace with rated power of 28000 W. The maximum power of the graphitizing is 22400 W. Constant-power duration of maintaining the maximum power is 24 h, to respectively obtain the primary particles and the secondary particles.

The primary particles and the secondary particles are uniformly mixed in a mass ratio of 50:50 and are sieved and demagnetized to obtain the graphite negative electrode active material final product.

At 20000 N, the graphite negative electrode active material has the compaction density of 1.61g/cm³, the graphitization degree of 92.48%, the specific surface area of 1.47 m²/g, and the volume distribution particle size Dv50 of 10.3 µm. At the pressure of 49000 N, the powder compaction density is 1.82 g/cm³, the gram volume is 350mAh/g, and the ID/IG is 0.075. The interlayer spacing d1 of a surface region is 0.3373. The interlayer spacing d2 of an inner region is 0.3360 nm. The particle size distribution (Dv90-Dv10)/Dv50 is 1.36.

### 2) Preparation of the positive electrode plate

A lithium iron phosphate positive electrode active material (LFP), a Super P conductive agent, and a PVDF binder are mixed in a mass ratio of 97:1:2. An N-methylpyrrolidone solvent is added and stirred uniformly to obtain positive electrode slurry. Then, the positive electrode slurry is uniformly applied onto an aluminum foil positive electrode current collector, followed by drying, cold pressing, and slitting, to obtain the positive electrode plate. The compaction density of the positive electrode plate is 2.5 g/cm³.

### 3) Preparation of the negative electrode plate

The prepared carbon-based negative electrode active material, a Super P conductive agent, a sodium carboxymethylcellulose thickener, and a butadiene styrene rubber binder are mixed in a mass ratio of 96:1:1.2:1.8. A deionized water solvent is added and stirred uniformly to obtain negative electrode slurry. The negative electrode slurry is uniformly applied to a copper foil negative electrode current collector, followed by drying, cold pressing, and slitting, to obtain the negative electrode plate. The negative electrode film layer has a compaction density of 1.6 g/cm³ and a surface density of 9.48 mg/cm².

### 4) Preparation of the electrolyte solution

Dimethyl carbonate (DMC), ethyl methyl carbonate (EMC), and ethylene carbonate (EC) are mixed in an argon atmosphere glove box with a water moisture less than 10 ppm in a weight ratio of 1:1:1 to obtain an organic solvent, and then LiPF6 is dissolved in the above organic solvent to prepare the electrolyte solution with a concentration of 1.0 mol/L. Then, vinylene carbonate (VC) is added. The content of the VC is 2% of the total mass of the electrolyte solution.

### 5) Separator

A polypropylene film is used as the separator.

### 6) Preparation of the secondary battery

The positive electrode plate, the separator, and the negative electrode plate are stacked in sequence, to cause the separator to isolate the positive electrode plate from the negative electrode plate. An electrode assembly is obtained by winding. The electrode assembly is arranged in an outer package. The electrolyte solution is injected after the electrode assembly is dried. After vacuum packaging, standing, formation, shaping, and other procedures, a lithium-ion battery is obtained.

### Embodiments 2 to 7 and Comparative examples 1 to 4

The preparation steps of Embodiments 2 to 7 and the preparation steps of comparative examples 1 to 4 are similar to the preparation steps of Embodiment 1, but a preparation parameter of the negative electrode active material is adjusted, specifically refer to Table 1-1 and Table 1-2.

**Table 1-1: Preparation parameters of the negative electrode active materials of Embodiments 1 to 7 and Comparative examples 1 to 4**

| Serial number | S1 | | | | | |
|---|---|---|---|---|---|---|
| | Type of raw material | Proportion % of the fibrous structure | Dv10 (µm) | Dv50 (µm) | Dv90 (µm) | Particle size distribution |
| Embodiment 1 | Needle coke | 61.0 | 4.1 | 9.4 | 15.3 | 1.19 |
| Embodiment 2 | Needle coke | 59.7 | 4.1 | 9.1 | 15.0 | 1.20 |
| Embodiment 3 | Needle coke | 60.5 | 4.5 | 9.3 | 14.3 | 1.05 |
| Embodiment 4 | Needle coke | 61.3 | 4.3 | 9.7 | 15.3 | 1.13 |
| Embodiment 5 | Needle coke | 63.5 | 4.8 | 9.4 | 15.5 | 1.14 |
| Embodiment 6 | Needle coke | 61.0 | 4.1 | 9.4 | 15.3 | 1.19 |
| Embodiment 7 | Needle coke | 61.0 | 4.1 | 9.4 | 15.3 | 1.19 |
| Comparative example 1 | Needle coke | 67.5 | 4.8 | 9.4 | 15.5 | 1.14 |
| Comparative example 2 | Needle coke | 62.1 | 4.7 | 9.8 | 16.3 | 1.18 |
| Comparative example 3 | Petroleum coke | 33.7 | 4.2 | 9.4 | 15.6 | 1.21 |
| Comparative example 4 | Petroleum coke | 27.9 | 4.2 | 9.5 | 15.7 | 1.21 |

**Table 1-2: Preparation parameters of the negative electrode active materials of Embodiments 1 to 7 and Comparative examples 1 to 4**

| Serial number | S2 | | | | S3 | | S4 |
|---|---|---|---|---|---|---|---|
| | Dv10 (µm) | Dv50 (µm) | Dv90 (µm) | Particle size distribution | Maximum power/rated power of graphitizing | Constant power time (h) | Primary particles: secondary particles (mass ratio) |
| Embodiment 1 | 7.1 | 14.1 | 23.2 | 1.14 | 80.00% | 24 | 50:50 |
| Embodiment 2 | 7.3 | 14.4 | 23.5 | 1.13 | 80.00% | 18 | 50:50 |
| Embodiment 3 | 7.6 | 14.5 | 24.8 | 1.19 | 80.00% | 20 | 50:50 |
| Embodiment 4 | 8.0 | 14.4 | 23.5 | 1.08 | 80.00% | 28 | 50:50 |
| Embodiment 5 | 8.3 | 14.5 | 25.6 | 1.19 | 85.00% | 28 | 50:50 |
| Embodiment 6 | 7.1 | 14.1 | 23.2 | 1.14 | 80.00% | 24 | 55:45 |
| Embodiment 7 | 7.1 | 14.1 | 23.2 | 1.14 | 80.00% | 24 | 60:40 |
| Comparative example 1 | 8.3 | 14.5 | 25.6 | 1.19 | 90.00% | 35 | 50:50 |
| Comparative example 2 | 8.4 | 13.5 | 25.8 | 1.29 | 80.00% | 24 | 100:0 |
| Comparative example 3 | 8.1 | 13.7 | 24.9 | 1.23 | 85.00% | 35 | 50:50 |
| Comparative example 4 | 8.1 | 14.3 | 25.8 | 1.24 | 85.00% | 35 | 50:50 |

The negative electrode active materials and the secondary batteries that are prepared in Embodiments 1 to 7 and Comparative examples 1 to 4 are tested by using the above test method, and results are shown in Table 2:

**Table 2: Test results of the parameters and the performance in Embodiments 1 to 7 and Comparative examples 1 to 4**

| Serial number | Negative electrode active material | | Secondary battery |
|---|---|---|---|
| | 20000 N-compaction density (g/cm³) | Gram volume (mAh/g) | Number of cycles |
| Embodiment 1 | 1.61 | 350.2 | 2068 |
| Embodiment 2 | 1.58 | 346.5 | 2015 |
| Embodiment 3 | 1.59 | 348.7 | 1991 |
| Embodiment 4 | 1.62 | 352.4 | 1930 |
| Embodiment 5 | 1.65 | 353.1 | 1832 |
| Embodiment 6 | 1.60 | 350.5 | 2005 |
| Embodiment 7 | 1.59 | 350.7 | 1960 |
| Comparative example 1 | 1.72 | 358.1 | 1573 |
| Comparative example 2 | 1.67 | 348.5 | 1650 |
| Comparative example 3 | 1.69 | 353.7 | 1621 |
| Comparative example 4 | 1.54 | 350.3 | 1605 |

Based on Embodiments 1 to 7 and Comparative examples 1 to 4, it can be seen that when the gram volume of the negative electrode active material is within the range of 345 mAh/g to 355 mAh/g, the powder compaction density of the negative electrode active material at the pressure of 20000 N is 1.55 g/cm³ to 1.65 g/cm³. The secondary battery prepared by using the negative electrode active material has a large number of cycles at 60°C, indicating that the secondary battery has good cycling performance.

In Comparative example 1, the gram volume of the negative electrode active material is 358.1 mAh/g, and the powder compaction density of the negative electrode active material at the pressure of 20000 N is increased to 1.72 g/cm³. However, the number of cycles of the secondary battery is only 1573, indicating that the powder compaction density of the negative electrode active material at the pressure of 20000 N exceeds 1.65 g/cm³. After the gram volume exceeds 355 mAh/g, it is not conducive to improving the cycling performance of the secondary battery.

In Comparative example 2, when the gram volume of the negative electrode active material is 348.5 mAh/g, and the negative electrode active material is entirely the primary particles, the powder compaction density of the negative electrode active material at the pressure of 20000 N is increased to 1.67 g/cm³. However, the number of cycles of the secondary battery is only 1650, indicating that the powder compaction density of the negative electrode active material at the pressure of 20000 N exceeds 1.65 g/cm³. This can affect the cycling performance of the secondary battery.

In Comparative example 3, when the gram volume of the negative electrode active material is 353.7 mAh/g, the powder compaction density of the negative electrode active material at the pressure of 20000 N is increased to 1.69 g/cm³. However, the number of cycles of the secondary battery is only 1621, indicating that the powder compaction density of the negative electrode active material at the pressure of 20000 N exceeds 1.65 g/cm³. This can affect the cycling performance of the secondary battery.

In Comparative example 4, when the gram volume of the negative electrode active material is 350.3 mAh/g, the powder compaction density of the negative electrode active material at the pressure of 20000 N is decreased to 1.54 g/cm³. The number of cycles of the secondary battery is only 1605, indicating that the powder compaction density of the negative electrode active material at the pressure of 20000 N is less than 1.55g/cm³. The cycling performance of the secondary battery is poor.

It should be noted that the present disclosure is not limited to the above implementations. The above embodiments are merely exemplary, and embodiments having substantially the same technical idea and the same effects within the scope of the technical solution of the present disclosure are all included in the technical scope of the present disclosure. In addition, other implementations constructed by applying various modifications conceivable to those skilled in the art to the implementations and combining some of the constituent elements of the implementations without departing from the scope of the essence of the present disclosure are also included in the scope of the present disclosure.

## Claims

1. A carbon-based negative electrode active material, wherein a gram volume of the carbon-based negative electrode active material is 345 mAh/g to 355 mAh/g, and a powder compaction density at a pressure of 20000 N is greater than 1.55 g/cm³ and less than 1.65 g/cm³.

2. The carbon-based negative electrode active material according to claim 1, wherein the powder compaction density of the carbon-based negative electrode active material at the pressure of 20000 N is 1.57 g/cm³ to 1.62 g/cm³, or the powder compaction density of the carbon-based negative electrode active material at a pressure of 49000 N is greater than 1.73 g/cm³ and less than 1.84 g/cm³.

3. The carbon-based negative electrode active material according to claim 1 or 2, wherein the gram volume of the carbon-based negative electrode active material is 346 mAh/g to 353 mAh/g.

4. The carbon-based negative electrode active material according to any one of claims 1 to 3, wherein the carbon-based negative electrode active material comprises primary particles and secondary particles; optionally, a quantity proportion of the primary particles in the carbon-based negative electrode active material is greater than or equal to a quantity proportion of the secondary particles in the carbon-based negative electrode active material.

5. The carbon-based negative electrode active material according to any one of claims 1 to 4, wherein the carbon-based negative electrode active material satisfies at least one of the following conditions:
a) a particle size distribution K is 1.0 to 1.6, optionally 1.1 to 1.5, K=(Dv90-Dv10)/Dv50;
b) a volume distribution particle size Dv50 is 8 µm to 13 µm, optionally, 9 µm to 12 µm; and
c) a graphitization degree is 88% to 95%, optionally 90% to 95%.

6. The carbon-based negative electrode active material according to any one of claims 1 to 5, wherein a specific surface area of the carbon-based negative electrode active material is 1.25 m²/g to 1.95 m²/g, optionally, 1.25 m²/g to 1.85 m²/g.

7. The carbon-based negative electrode active material according to any one of claims 1 to 6, wherein a tap density of the carbon-based negative electrode active material layer is 1.07 g/cm³ to 1.27 g/cm³.

8. The carbon-based negative electrode active material according to any one of claims 1 to 7, wherein the carbon-based negative electrode active material is synthetic graphite.

9. A preparation method for a carbon-based negative electrode active material, comprising the following steps:
providing a raw material;
treating the raw material to obtain an intermediate;
graphitizing the intermediate to obtain a graphitized product; and
screening the graphitized product to obtain the carbon-based negative electrode active material,
wherein a gram volume of the carbon-based negative electrode active material is 345 mAh/g to 355 mAh/g, and a powder compaction density at a pressure of 20000 N is greater than 1.55 g/cm³ and less than 1.65 g/cm³.

10. The preparation method according to claim 9, wherein the graphitizing satisfies at least one of the following conditions:
(1) maximum power of the graphitizing is 70% to 90% of rated power of graphitizing equipment;
(2) a temperature of the graphitizing is 2600°C to 3000°C; and
(3) time of the graphitizing is 10 h to 50 h.

11. The preparation method according to claim 9 or 10, wherein the raw material comprises one or more of a petroleum coke, a needle coke, and a pitch coke, optionally, comprises the needle coke.

12. The preparation method according to claims 9 to 11, wherein based on a total volume of the raw material, a volume percentage of a fibrous structure in the raw material is greater than or equal to 55%, optionally, 58% to 70%.

13. The preparation method according to any one of claims 9 to 12, wherein the treating the raw material specifically comprises the following steps:
crushing, shaping, and grading the raw material to obtain a first precursor;
pelleting the precursor to obtain a second precursor; and
performing low-temperature carbonization on the first precursor and the second precursor to obtain the intermediate product.

14. The preparation method according to claim 13, wherein the first precursor satisfies at least one of the following conditions:
(1) a particle size Dv50 of the first precursor is 6.5 µm to 10.5 µm;
(2) a particle size distribution (Dv90-Dv10)/Dv50 of the first precursor is 1.05 to 1.75; and
(3) a tap density of the first precursor is 0.55 g/cm³ to 0.75 g/cm³.

15. The preparation method according to claim 13, wherein a volume distribution particle size Dv50 of the second precursor is 11 µm to 15 µm.

16. The preparation method according to any one of claims 13 to 15, wherein a graphitized product of the first precursor and a graphitized product of the second precursor are mixed in a mass ratio of (1:1) to (6:4).

17. A secondary battery, comprising a negative electrode plate, wherein the negative electrode plate comprises a negative electrode current collector and a negative electrode film layer arranged on at least one surface of the negative electrode current collector; the negative electrode film layer comprises the carbon-based negative electrode active material according to any one of claims 1 to 8 or the carbon-based negative electrode active material prepared by the method according to any one of claims 9 to 16.

18. The secondary battery according to claim 17, wherein the negative electrode plate satisfies at least one of the following conditions:
(1) a compaction density of the negative electrode film layer is 1.5 g/cm³ to 1.65 g/cm³, optionally, 1.55 g/cm³to 1.65 g/cm³;
(2) a specific surface area of the negative electrode film layer is 0.7 m²/g to 2 m²/g, optionally, 1.0 m²/g to 1.6 m²/g; and
(3) a porosity of the negative electrode film layer is 0.22 to 0.42, optionally, 0.27 to 0.37.

19. A power consuming apparatus, comprising the secondary battery according to claim 17 or 18.
